# EUROPÄISCHE PATENTANMELDUNG

(11) **EP 3 770 833 A1**
(43) Veröffentlichungstag der Anmeldung: **27.01.2021**
(21) Anmeldenummer: 19188240.6
(22) Anmeldetag: 25.07.2019
(51) Int. Cl.: G06Q 10/06, G06Q 50/06

(54) **RESSOURCENMANAGEMENTVORRICHTUNG UND VERFAHREN ZUM VERWALTEN ODER VERTEILEN EINER PHYSIKALISCHEN RESSOURCE**

(71) Anmelder: Siemens Aktiengesellschaft, 80333 München (DE); Friedrich-Alexander-Universität Erlangen-Nürnberg, 91054 Erlangen (DE)
(72) Erfinder: Bakakeu Ngassam, Romuald Jupiter, 91054 Erlangen (DE); Peschke, Jörn, 90489 Nürnberg (DE); Tolksdorf, Schirin, 90461 Nürnberg (DE)

(57) **Zusammenfassung**

Es wird eine Ressourcenmanagementvorrichtung zum Verwalten oder Verteilen einer physikalischen Ressource in einer Anlage mit mehreren Teilnehmern vorgeschlagen, wobei jeder Teilnehmer eingerichtet ist, mit der physikalischen Ressource zu wechselwirken oder die physikalische Ressource zu verändern. Die Ressourcenmanagementvorrichtung umfasst:
eine Konfigurationseinheit, die eingerichtet ist, auf Basis mehrerer teilnehmer-spezifischen Selbstbeschreibungen, Konfigurationsinformationen bereitzustellen,
eine Priorisierungseinheit, die eingerichtet ist, auf Basis mehrerer Optimierungsvorgaben zumindest eine bestimmte Optimierungsvorgabe auszuwählen,
eine Strategieeinheit, die eingerichtet ist, aus mehreren bereitgestellten Optimierungsstrategien eine bestimmte Optimierungsstrategie festzulegen, wobei die Festlegung auf Basis der Konfigurationsinformationen sowie der bestimmten Optimierungsvorgabe erfolgt,
eine Optimierungseinheit, die eingerichtet ist, die Anlage unter Verwendung der festgelegten Optimierungsstrategie unter Ausführung einer Aktion an der Anlage anzusteuern und eine Belohnungsfunktion als Ergebnis der Ansteuerung der Anlage zu ermitteln, wobei die Aktion eine veränderte Ansteuerung und/oder eine Veränderung der Konfiguration der Anlage umfasst.

## Beschreibung

Diese Anmeldung betrifft eine Ressourcenmanagementvorrichtung und Verfahren zum Verwalten oder Verteilen einer physikalischen Ressource.

In herkömmlichen Energieversorgungssystemen, für beispielsweise private Haushalte, erhöht sich stetig die Anzahl an nicht-deterministischen Energiequellen (Quellen), beispielsweise aufgrund von unterschiedlichen Sonneneinstrahlungen bei Photovoltaikanlagen. Auf diese Schwankungen der Energiequellen muss das Energieversorgungssystem flexibel reagieren können, in dem es beispielsweise Verbraucher (Senken) und/oder Erzeuger ein- und abschaltet, um die Energieverteilung zu managen oder zu regeln. Damit auch die Energieversorgung von industrielle Energieversorgungssystemen zuverlässig gemanagt werden kann, sind industrielle Ressourcen- und/oder Lastmanagementsysteme erforderlich. Die richtige Auslegung und Konfiguration dieser industriellen Ressourcen- und/oder Lastmanagementsysteme stellt eine Herausforderung dar, da sich auch bei einer relativ geringen Anzahl von Teilnehmern, wie Verbrauchern, Quellen und Speichern, eine Vielzahl von Reaktionsmöglichkeiten ergibt.

Dieses Problem wird noch verstärkt durch die Tatsache, dass einfache Vermarktungsprinzipien wie Spitzenlastmanagement (d.h. Einhaltung eines Limits) zunehmend durch komplexere Ansätze, wie der Reaktion auf Preissignale oder dem Folgen eines vorgegebenen Lastprofils, ersetzt werden.

Damit werden die notwendigen Algorithmen und deren Parametrierung komplexer, was wiederrum eine Erstellung eines spezifischen Modells des Verhaltens der Anlage erfordert. Dieses Modell kann i.d.R. nur von Spezialisten erstellt und durchgeführt werden und stellt einen erheblichen Kostenfaktor dar, da projektspezifische Lösungen erheblich teurer sind, als beispielsweise parametrierbare einfache Spitzenlastmanagementsysteme.

Nachträgliche Änderungen der Teilnehmerstruktur der Anlage oder geänderte Vermarktungskonzepte, beispielsweise bedingt durch Veränderungen im Energiemarkt, erfordern erneut einen entsprechend hohen Aufwand zur Neukonfiguration der Anlage. Die Kosten zur Konfiguration limitieren damit heute den Einsatz von industriellen Ressourcen- und/oder Lastmanagementsysteme in erheblichem Maße.

Hierfür gibt es im Stand der Technik verschiedene Ansätze. Das Spektrum heutiger industrieller Ressourcen- und/oder Lastmanagementsysteme reicht von einfachen SPS-basierten Spitzenlastmanagementsystemen bis hin zu speziell für ein Unternehmen entworfenen Lösungen.

Allen diesen Ansätzen ist gemeinsam, dass eine Beschreibung und/oder Modellierung des energetischen Verhaltens der Anlage erfolgt, welche zur Laufzeit dann ausgewertet werden kann und damit eine dynamische Reaktion auf verschiedenen Anforderungen, wie beispielsweise eine Lastreduktion einzelner Teilnehmer, ermöglicht wird.

Die Art und Weise der Reaktion der Anlage oder des Systems auf bestimmte Anforderungen, also die zugrundeliegende Strategie, ist jedoch fest vorgegeben und kann demzufolge bei wechselnden Anforderungen nicht ohne aufwändige manuelle Konfigurationsschritte seitens eines Anwenders oder sogar Änderungen der Implementierung durch den Anwender angepasst werden.

Vor diesem Hintergrund besteht eine Aufgabe der vorliegenden Erfindung darin, Mittel bereitzustellen, um den Konfigurationsaufwand einer Ressourcenmanagementvorrichtung zu verringern.

Gemäß einem ersten Aspekt wird eine Ressourcenmanagementvorrichtung zum Verwalten oder Verteilen zumindest einer physikalischen Ressource in einer Anlage mit mehreren Teilnehmern vorgeschlagen, wobei jeder der mehreren Teilnehmer eingerichtet ist, in Abhängigkeit von einer Ansteuerung mit der physikalischen Ressource zu wechselwirken oder die physikalische Ressource zu verändern. Die Ressourcenmanagementvorrichtung umfasst:
eine Konfigurationseinheit, die eingerichtet ist, auf Basis mehrerer erhaltener teilnehmer-spezifischen Selbstbeschreibungen, Konfigurationsinformationen bereitzustellen,
eine Priorisierungseinheit, die eingerichtet ist, auf Basis mehrerer erhaltener Optimierungsvorgaben zumindest eine bestimmte Optimierungsvorgabe auszuwählen,
eine Strategieeinheit, die eingerichtet ist, aus mehreren bereitgestellten Optimierungsstrategien eine bestimmte Optimierungsstrategie festzulegen, wobei die Festlegung auf Basis der bereitgestellten Konfigurationsinformationen sowie der bestimmten Optimierungsvorgabe erfolgt,
eine Optimierungseinheit, die eingerichtet ist, die Anlage unter Verwendung der festgelegten Optimierungsstrategie unter Ausführung einer Aktion an der Anlage anzusteuern, die angesteuerte Anlage zu überwachen, und eine Belohnungsfunktion als Ergebnis der Ansteuerung der Anlage zu ermitteln, wobei das Ansteuern der Anlage eine Ansteuerung zumindest einer der mehreren Teilnehmer umfasst, wobei die Aktion eine veränderte Ansteuerung und/oder eine Veränderung der Konfiguration der Anlage umfasst.

Die bereitgestellte Ressourcenmanagementvorrichtung ist im Stande, sich automatisch und dynamisch selbst zu konfigurieren. Dabei legt ein Anwender zumindest ein Ziel oder mehrere Ziele (bestimmte Optimierungsvorgaben) fest, nach denen eine physikalische Ressource, die von der Anlage verwendet wird, optimiert, verwaltet und/oder verteilt werden soll. Mittels einer Ansteuerung der Teilnehmer durch die Optimierungseinheit werden Aktionen ausgeführt, welche die physikalische Ressource und die Teilnehmer verändern, mit dem Ziel, das optimale Ressourcenmanagement für die Wechselwirkung zwischen physikalischer Ressource und den vorhandenen Teilnehmern der Anlage zu finden. Infolgedessen ergeben sich eine Reihe von Vorteilen:
Die Ressourcenmanagementvorrichtung ist dazu eingerichtet, die teilnehmer-spezifische Selbstbeschreibung eines Teilnehmers oder mehrerer Teilnehmer automatisch auszulesen und abzuspeichern. Dies hat den Vorteil, dass kein manuelles Anlegen der Teilnehmer der Ressourcenmanagementvorrichtung und kein manuelles Eintragen der teilnehmer-spezifischen Selbstbeschreibung notwendig ist. Dies hat ferner den Vorteil, dass der Konfigurationsaufwand der Ressourcenmanagementvorrichtung verringert wird. Ein weiterer Vorteil ist, dass die Ressourcenmanagementvorrichtung aufgrund der automatischen Selbstkonfiguration und des automatischen Betriebes und infolgedessen durch den Verzicht von menschlichen Eingriffen eine geringe Fehlerrate aufweist.

Die Ressourcenmanagementvorrichtung ist ferner dazu eingerichtet, neue, zu der Ressourcenmanagementvorrichtung hinzukommende Teilnehmer, automatisch der Ressourcenmanagementvorrichtung bekannt zu machen, ohne, dass eine zusätzliche Konfiguration der Ressourcenmanagementvorrichtung notwendig ist. Dies hat den Vorteil, dass der Konfigurationsaufwand der Ressourcenmanagementvorrichtung verringert wird. Dies erhöht ferner die Flexibilität der Ressourcenmanagementvorrichtung und die der Anlage.

Die Ressourcenmanagementvorrichtung ist ferner dazu eingerichtet, die Teilnehmer, insbesondere die teilnehmer-spezifische Selbstbeschreibung der Teilnehmer, zu überwachen. Dabei kann beispielsweise eine durchschnittliche Last eines Teilnehmers, die sich dynamisch verändert, automatisch und zuverlässig überwacht werden. Dies hat den Vorteil, dass die Informationen über einen Teilnehmer oder mehrerer Teilnehmer aktuell gehalten werden und dynamisch in die Optimierungsstrategie und in die Optimierung und die Verwaltung der physikalischen Ressource miteinbezogen werden können. Dies erhöht die Zuverlässigkeit der Berechnungen und Vorhersagen der Ressourcenmanagementvorrichtung und verbessert somit die Optimierung und Verwaltung der physikalischen Ressource.

Die Ressourcenmanagementvorrichtung ist ferner dazu eingerichtet, dass die Optimierungsstrategie der Ressourcenmanagementvorrichtung nicht vom Anwender implementiert, vorgegeben oder definiert werden muss, sondern automatisch je nach Teilnehmer und Optimierungsvorgaben, die durch den Anwender festgelegt werden, die optimale Ressourcenmanagementstrategie ausgewählt wird. Dies hat den Vorteil, dass der Konfigurationsaufwand der Ressourcenmanagementvorrichtung verringert wird und die Ressourcenmanagementstrategie oder Optimierungsstrategie nicht manuell durch einen Anwender nachjustiert werden muss. Dies hat zusätzlich den Vorteil, dass der Aufwand für das Finden einer geeigneten Optimierungsstrategie für den Anwender sehr gering ist, da keine explizite Modellierung des Gesamtsystems und seines Verhaltes notwendig ist.

Die Ressourcenmanagementvorrichtung ist ferner dazu eingerichtet, neue Optimierungsvorgaben, Einschränkungen (Constraints) und/oder Eingangssignale zur Laufzeit hinzuzufügen. Die Ressourcenmanagementvorrichtung ist anschließend in der Lage, sich automatisch an die geänderten Optimierungsvorgaben, Einschränkungen (Constraints) und/oder Eingangssignale anzupassen und die optimalen Parameter und die geeigneten Teilnehmer zur Erreichung der neuen Optimierungsvorgaben selbstständig und automatisch zu finden. Dies erhöht die Flexibilität des Systems oder des Ressourcenmanagementsystems, umfassend die Ressourcenmanagementvorrichtung, die Teilnehmer und die Anlage, und verringert den Aufwand zur Konfiguration dieser.

Ein weiterer Vorteil der Ressourcenmanagementvorrichtung ist die hierarchische und modulare Struktur dieser, wodurch die Ergebnisse der einzelnen Einheiten, wie der Konfigurationseinheit oder der Optimierungseinheit interpretierbar und bewertbar sind. Dies erhöht die Benutzerfreundlichkeit der Ressourcenmanagementvorrichtung.
Ein weiterer Vorteil der Ressourcenmanagementvorrichtung ist, dass sowohl bei Brownfield-Anlagen als auch bei der Neuplanung von Produktionsanlagen in einer Simulation der Anlage das Gesamtverhalten für verschiedene Optimierungsstrategien und Kombinationen von Teilnehmern getestet werden kann. Vorteilhafterweise können im Falle von Brownfield-Anlagen bereits existierende Optimierungsstrategien in die Ressourcenmanagementvorrichtung integriert werden. Dabei wird die existierende Optimierungsstrategie mit neuen erlernten Optimierungsstrategien verglichen und die beste ausgewählt.

Die Ressourcenmanagementvorrichtung weist ferner den Vorteil auf, dass das Verhalten des Ressourcenmanagement, sich nicht nach einer festgelegten Optimierungsstrategie richtet, sondern sich an den aktuellen Optimierungsvorgaben des Anwenders, die Konfiguration der Teilnehmer und allen aktuellen energetischen Zuständen der Teilnehmer richtet. Dies erhöht die Flexibilität des Systems, auf kurzfristige Änderungen reagieren zu können und erfordert kein Expertenwissen, um die Ressourcenmanagementvorrichtung konfigurieren zu können.

Die Ressourcenmanagementvorrichtung kann hardwaretechnisch und/oder auch softwaretechnisch implementiert sein. Bei einer hardwaretechnischen Implementierung kann die Ressourcenmanagementvorrichtung zum Beispiel als ein Computer oder als ein Mikroprozessor ausgebildet sein. Bei einer softwaretechnischen Implementierung kann die Ressourcenmanagementvorrichtung als Computerprogrammprodukt, als eine Funktion, als eine Routine, als Teil eines Programmcodes oder als ausführbares Objekt ausgebildet sein.

Das Ressourcenmanagementsystem umfasst die Ressourcenmanagementvorrichtung und optional die Anlage sowie die mehreren Teilnehmer der Anlage. Die Anlage kann virtuell implementiert sein, beispielsweise in der Art einer Simulation der zu optimierenden Anlage.

Ein Teilnehmer ist beispielsweise ein Verbraucher (Senke), eine Quelle oder ein Speicher für die Ressource.

Die Konfigurationseinheit erhält insbesondere an ihrem Eingang als Eingangsparameter die teilnehmer-spezifischen Selbstbeschreibungen der Teilnehmer des Systems. Ferner ist die Konfigurations-Einheit eingerichtet, die erhaltenen Teilnehmer insbesondere in unterschiedliche Klassen einzuteilen. Vorzugsweise ist die Konfigurationseinheit dazu eingerichtet, die unterschiedlichen Klassen Kostenfunktionen zuzuordnen, die das Flexibilisierungspotential und Verhalten der Teilnehmer bezüglich einstellbarer Parameter, welche innerhalb der teilnehmer-spezifischen Selbstbeschreibung ausgebildet sind, beschreiben. Die Konfigurationseinheit ist beispielsweise eingerichtet, nach der Klasseneinteilung anschließend automatisiert eine optimale Priorisierung der vorhandenen Teilnehmer zu finden, nach der diese zur Laufzeit dann geregelt werden. Insbesondere wird bei der Priorisierung festgelegt, welche Teilnehmer zuerst reguliert bzw. angesteuert werden, wie beispielsweise, dass zuerst der Speicher entladen wird, bevor eine Senke im Teillastbetrieb betrieben wird.

Die teilnehmer-spezifische Selbstbeschreibung ist insbesondere jeweils spezifisch für einen Teilnehmer und umfasst beispielsweise ein Open Platform Communications Unified Architecture (OPC UA)-Informationsmodell.

Konfigurationsinformationen umfassen insbesondere die Priorisierung der Teilnehmer, die Klassenunterteilung der Teilnehmer, welche insbesondere die ausgelesenen teilnehmer-spezifischen Selbstbeschreibungen der jeweiligen Teilnehmer umfasst. Die Konfigurationsinformationen werden vorzugsweise der Strategieeinheit an deren Eingang bereitgestellt.

Die Priorisierungseinheit erhält insbesondere Eingabeparameter, welche Informationen über Randbedingungen (Constraints) und Optimierungsziele oder Optimierungsvorgaben enthalten. Optimierungsvorgaben sind beispielsweise skalare Werte, wie ein Limit, ein Preissignal, ein Leistungsband oder ein Zeitlastfenster, in dem sich die Leistung der zu optimierenden Anlage bewegen sollte. Die Randbedingungen sind vorzugsweise mathematisch formuliert und sind übergeordnete Regeln, die eingegeben werden können, und damit anschließend bei der Optimierung mittels einer bestimmten Optimierungsstrategie berücksichtigt werden.

Weitere Eingabeparameter, welche weder den Randbedingungen noch den Optimierungsvorgaben zugeordnet werden können, werden an einen Cloud-Service zur manuellen Bewertung und Zuordnung zu einer Kostenfunktion weitergeleitet. Zudem kann die Priorisierungseinheit historische Daten als weitere Eingabeparameter erhalten. Es besteht ferner insbesondere die Möglichkeit, die Eingabeparameter für die Priorisierungseinheit mit einer für die Ressourcenmanagementvorrichtung verständlichen Semantik zu versehen. Die Eingabeparameter können allerdings auch ohne weitere Informationen - lediglich Informationen auf Datenebene, wie beispielsweise Datentyp und Einheit, - in das System eingeben werden.

Die Priorisierungseinheit ist ferner dazu eingerichtet, die erhaltenen Optimierungsvorgaben mittels eines Klassifizierungsverfahrens zu klassifizieren. Insbesondere ist das Klassifizierungsverfahren vortrainiert. Jede Klasse hat dabei vorzugsweise eine Kostenfunktion hinterlegt, welche die Optimierungsvorgabe mathematisch beschreibt. Die Priorisierungseinheit ist vorzugsweise eingerichtet, aus den erhaltenen Optimierungsvorgaben, die optimale Priorisierung zu ermitteln und auf Basis dieser die bestimmte Optimierungsvorgabe auszuwählen.

Die Strategieeinheit erhält insbesondere als Eingabeparameter die priorisierten Teilnehmer von der Konfigurationseinheit, die priorisierten Optimierungsvorgaben und die Randbedingungen (Constraints) der Priorisierungseinheit. Hierbei kann auch von einem Zustand der Strategieeinheit gesprochen werden, welcher sich aus den oben genannten Eingabeparametern und zusätzlich den aktuellen Zuständen der Teilnehmer, wie beispielsweise eine durchschnittliche Last eines Teilnehmers, zusammensetzt.

Insbesondere ist die Strategieeinheit dazu eingerichtet, eine bestimmte Optimierungsstrategie aus den bereitgestellten Optimierungsstrategien, wie Spitzenlastmanagement, Folgen einer Lastkurve oder Toleranzband zu berücksichtigen, diese auszuwählen und die erhaltenen Eingangsparameter, also die priorisierten Teilnehmer, priorisierte Optimierungsvorgaben sowie Randbedingungen, an die ausgewählte Optimierungsstrategie unverändert weiter zu geben.

Vorzugsweise ist die Strategieeinheit dazu eingerichtet, eine festgelegte Optimierungsstrategie für eine definierte Anzahl von Durchläufen zu testen. Dies bedeutet, dass die Strategieeinheit eine bestimmte Optimierungsstrategie auswählt und an die Optimierungseinheit weiterleitet. Auf Basis der festgelegten Optimierungsstrategie steuert die Optimierungseinheit anschließend die Anlage an.

Insbesondere aufgrund der Ansteuerung und der Veränderung der Konfiguration der Anlage oder der veränderten Ansteuerung der Anlage verändert sich die physikalische Ressource. Die Belohnungsfunktion, welche als Ergebnis aus der Ansteuerung mittels der festgelegte Optimierungsstrategie erhalten wird, wird anschließend von der Optimierungseinheit bewertet. Die Optimierungseinheit ist insbesondere dazu eingerichtet, für eine definierte Anzahl von Durchläufen die bestimmte Optimierungsstrategie zu durchlaufen.

Nachdem die bestimmte Optimierungsstrategie für die definierte Anzahl von Durchläufen getestet wurde, ist die Strategieeinheit dazu eingerichtet eine weitere bestimmte Optimierungsstrategie auszuwählen und an die Optimierungseinheit zu übertragen. Anschließend wird die weitere bestimmte Optimierungsstrategie für eine weitere definierte Anzahl von Durchläufen getestet, solange, bis alle (bestimmten und weiteren) Optimierungsstrategien der Strategieeinheit an der Anlage durch die Optimierungseinheit getestet wurden.

Nach jedem Durchlauf ist die Optimierungseinheit dazu eingerichtet, eine Belohnungsfunktion als Ergebnis der Ansteuerung der Anlage auf Basis der Optimierungsstrategie zu ermitteln.

Für jede Optimierungsstrategie wird somit durch die Optimierungseinheit eine Belohnungsfunktion ermittelt, was zu mehreren Belohnungsfunktionen führt. Die Belohnungsfunktion gibt beispielsweise Auskunft über die eingesparten Kosten oder des Durchsatzes der jeweiligen getesteten Optimierungsstrategie. Die Optimierungsstrategie, welche im Vergleich zu allen anderen getesteten Optimierungsstrategien insbesondere die meisten Kosten eingespart hat, wird als eine optimale Optimierungsstrategie ausgewählt. Beispielsweise kann ein Anlagenbetreiber oder der Anwender der Ressourcenmanagementvorrichtung eine Priorisierung der Kosten eingeben, die eingespart werden sollen. Insbesondere kann nach Energiekosten oder Materialkosten priorisiert werden.

Der Zustand der Optimierungseinheit setzt sich vorzugsweise aus den Eingabeparametern, wie den priorisierten Teilnehmern und den Optimierungsvorgaben, und dem aktuellen Zustand der Umgebung, wie beispielsweise dem aktuellen Zustand der Teilnehmer oder dem Leistungswert der Anlage, zusammen. Die Optimierungseinheit steuert insbesondere solange die Anlage mittels verschiedener Aktionen an, bis die optimale Belohnungsfunktion gefunden wurde und somit bis die optimale Aktion und damit die optimale Optimierungsstrategie gefunden wurde, an. Dabei lernt insbesondere die Optimierungseinheit die optimale Optimierungsstrategie in Abhängigkeit der priorisierten Optimierungsvorgaben und Teilnehmer, beispielsweise mittels eines Algorithmus zum Maschinellen Lernen.

Gemäß einer Ausführungsform ist die Konfigurationseinheit, die Priorisierungseinheit, die Strategieeinheit und die Optimierungseinheit jeweils als ein Computerprogramm, insbesondere als ein autonomer Software-Agent oder als ein autonomer Softbot ausgebildet.

Dies hat den Vorteil, dass die als Software-Agenten ausgebildeten jeweiligen Einheiten im Stande sind, sich eigenständig und sich eigendynamisch (autonom) zu verhalten und automatisch verschiedene Optimierungen, Priorisierungen, Klassifizierungen von Teilnehmern und deren Strategien durchzuführen. Dies verringert den Konfigurationsaufwand für die Ressourcenmanagementvorrichtung.

Ein autonomer Software-Agent, ein autonomer Softbot oder ein Agent ist insbesondere zu eigenständigen und eigendynamischem (autonomem) Verhalten fähig. Das bedeutet vorzugsweise, dass abhängig von verschiedenen Zuständen (Status), ein bestimmter Verarbeitungsvorgang abläuft, ohne dass von außen ein weiteres Startsignal gegeben wird oder während des Vorgangs ein äußerer Steuerungseingriff erfolgt.

Vorzugsweise handelt es sich bei den als Agent ausgebildeten Einheiten, wie der Priorisierungs- und der Strategieeinheit um Agenten, welche mittels Algorithmen für Maschinelles lernen verwendet werden und trainiert werden können. Im vorliegenden Fall kann als Beispiel für Maschinelles Lernen bestärktes Lernen (Reinforcement Learning) verwendet werden. Insbesondere sind die Strategieeinheit und die Optimierungseinheit als Reinforcement Learning-Agenten ausgebildet.

Die Konfigurationseinheit, die Priorisierungseinheit und die Strategieeinheit sind insbesondere bereits mit mehreren Testdatensätzen, umfassend verschiedene Teilnehmer und Optimierungsvorgaben, vortrainiert und müssen nur noch auf die Gegebenheiten der zu optimierenden Anlage angepasst werden. Durch das Vortrainieren werden Initialgewichtungen für bestimmte Eingabeparameter, welche die Einheiten oder Agenten erhalten, eingestellt. Somit müssen die Agenten in vorteilhafter Weise nicht mehr mit einem leeren Datensatz das Training beginnen. Vorzugsweise können die aktuellen Werte, welche von den einzelnen Agenten erhalten werden, insbesondere die Konfigurationsinformationen sowie die Ausgangsparameter des Priorisierungsagenten, zur Laufzeit als auch für das Training verwendet werden.

Durch die Modularität der Ressourcenmanagementvorrichtung, insbesondere durch die logische Struktur dieser, ist es möglich, die Agenten durch vordefinierte Regeln zu ersetzen, was in vorteilhafter Weise die Trainingsdauer verkürzt.

Diese Selbstkonfiguration oder das automatische Konfigurieren der Ressourcenmanagementvorrichtung und/oder des Ressourcenmanagementsystems erfolgt automatisiert in einem mehrstufigen Lernverfahren mittels der vier Software-Agenten bzw. der Konfigurationseinheit, der Priorisierungseinheit, der Strategieeinheit und der Optimierungseinheit, wobei das mehrstufige Lernverfahren zur Initialisierung und/oder bei einer Aktualisierung eines Eingabeparameters, wie dem Hinzukommen eines Teilnehmers, durchgeführt wird.

Gemäß einer weiteren Ausführungsform weist die Ressourcenmanagementvorrichtung eine Teilnehmerverwaltung auf, welche die mehreren Teilnehmer umfasst und welche eingerichtet ist, die mehreren teilnehmer-spezifischen Selbstbeschreibungen für die Konfigurationseinheit bereitzustellen.

Dadurch werden automatisch neu hinzukommende Teilnehmer der Konfigurationseinheit mittels der Teilnehmerverwaltung bereitgestellt. Dies hat den Vorteil, dass kein manuelles Anlegen der Teilnehmer in der Teilnehmerverwaltung und kein manuelles Eintragen der teilnehmer-spezifischen Selbstbeschreibung in der Teilnehmerverwaltung mehr notwendig ist. Dies hat den Vorteil, dass sich der Aufwand zum Konfigurieren der Ressourcenmanagementvorrichtung und/oder der Teilnehmerverwaltung verringert.

Die Teilnehmerverwaltung kann in Hardware oder Software ausgebildet sein und ist dazu eingerichtet, der Konfigurationseinheit die mehreren teilnehmer-spezifischen Selbstbeschreibungen an einem Eingang der Konfigurationseinheit bereitzustellen.
Die Teilnehmerverwaltung ist ferner dazu eingerichtet, automatisch die Informationen aus der teilnehmer-spezifischen Selbstbeschreibung auszulesen und in die Teilnehmerverwaltung einzutragen.

Gemäß einer weiteren Ausführungsform ist die Ressourcenmanagementvorrichtung ferner eingerichtet, die mehreren Teilnehmer in der Teilnehmerverwaltung dynamisch auf eine Änderung der jeweiligen teilnehmer-spezifischen Selbstbeschreibung der einzelnen Teilnehmer der mehreren Teilnehmer zu überwachen.

Die Ressourcenmanagementvorrichtung ist ferner dazu eingerichtet, die Teilnehmer, insbesondere die teilnehmer-spezifischen Selbstbeschreibungen der Teilnehmer, zu überwachen. Dabei kann beispielsweise eine durchschnittliche Last eines Teilnehmers, die sich dynamisch verändert und nicht immer den gleichen Wert besitzt, automatisch und zuverlässig überwacht werden. Dies hat den Vorteil, dass die Informationen über einen Teilnehmer oder mehrerer Teilnehmer aktuell gehalten werden und dynamisch in die Optimierungsstrategie und in die Optimierung und die Verwaltung der physikalischen Ressource miteinbezogen werden können. Dies erhöht die Zuverlässigkeit der Berechnungen und Vorhersagen der Ressourcenmanagementvorrichtung und verbessert somit die Optimierung und Verwaltung der physikalischen Ressource.

Ferner ist die Teilnehmerverwaltung insbesondere dazu eingerichtet, neue Teilnehmer zur Laufzeit hinzuzufügen oder zu entfernen.

Gemäß einer weiteren Ausführungsform weist die Ressourcenmanagementvorrichtung einen mit der Teilnehmerverwaltung koppelbaren Client auf, der eingerichtet ist, einen neuen Teilnehmer für die Teilnehmerverwaltung automatisch zu erkennen, die teilnehmer-spezifische Selbstbeschreibung des neuen Teilnehmers auszulesen und den neuen Teilnehmer der Teilnehmerverwaltung zur weiteren Verarbeitung bereitzustellen.

Die Ressourcenmanagementvorrichtung, insbesondere der Client, ist ferner dazu eingerichtet, neue, zu der Ressourcenmanagementvorrichtung hinzukommende Teilnehmer, automatisch der Teilnehmerverwaltung bekannt zu machen, ohne, dass eine zusätzliche Konfiguration der Ressourcenmanagementvorrichtung notwendig ist. Dies hat den Vorteil, dass der Konfigurationsaufwand der Ressourcenmanagementvorrichtung verringert wird. Dies erhöht ferner die Flexibilität der Ressourcenmanagementvorrichtung und die der Anlage.

Der Client ist insbesondere dazu eingerichtet, neue Teilnehmer der Teilnehmerverwaltung bereitzustellen, sobald der Client einen neuen Teilnehmer erkennt. Nach der Bereitstellung des neuen Teilnehmers für die Teilnehmerverwaltung wird beispielsweise in der Teilnehmerverwaltung automatisch ein neuer Teilnehmer angelegt und anschließend mit den Informationen gefüllt, die der Client der Ressourcenmanagementvorrichtung zur Verfügung stellt.

Der Client ist vorzugsweise mit der Teilnehmerverwaltung gekoppelt.

Der Client ist beispielsweise als Open Platform Communications Unified Architecture (OPC UA)-Client ausgebildet.

Der Client stellt insbesondere seine Informationen über neue Teilnehmer über einen Message Broker der Teilnehmerverwaltung zur Verfügung und/oder ist über den Message Broker mit der Teilnehmerverwaltung gekoppelt. Die Teilnehmerverwaltung kann sich an dem Client subskribieren, um über neue Teilnehmer informiert zu werden.

Gemäß einer weiteren Ausführungsform weist die Ressourcenmanagementvorrichtung einen mit der Teilnehmerverwaltung koppelbaren Server auf, der eingerichtet ist, den neuen Teilnehmer dem mit der Teilnehmerverwaltung koppelbaren Client zum Erkennen des neuen Teilnehmers bereitzustellen.

Die Verwendung des Servers hat den Vorteil, dass dieser in vorteilhafter Weise dem Client automatisch ein Signal bereitstellt, welches Auskunft darüber gibt, dass ein neuer Teilnehmer bereitsteht. Dies hat den Vorteil, dass der Konfigurationsaufwand der Ressourcenmanagementvorrichtung verringert wird. Dies erhöht ferner die Flexibilität der Ressourcenmanagementvorrichtung und die der Anlage.

Der Server ist vorzugsweise mit der Teilnehmerverwaltung und/oder mit dem Client gekoppelt.

Der Server ist beispielsweise als ein "Dynamic Host Configuration Protocol"-Server (DHCP-Server) ausgebildet.

Der Server ist insbesondere dazu eingerichtet, einen Discovery Mechanismus des Clients anzustoßen, sobald eine neue IP-Adresse vergeben wird, also ein neuer Teilnehmer erkannt wird, um dem Client den neuen Teilnehmer bekannt zu machen und/oder damit der Client den neuen Teilnehmer erkennen kann.

Gemäß einer weiteren Ausführungsform ist die Optimierungseinheit ferner eingerichtet, die Anlage unter Verwendung der festgelegten Optimierungsstrategie unter Ausführung einer weiteren Aktion an der Anlage erneut anzusteuern, die erneute angesteuerte Anlage zu überwachen, und eine weitere Belohnungsfunktion als Ergebnis der erneuten Ansteuerung der Anlage zu ermitteln, wobei die Optimierungseinheit ferner eingerichtet ist, die ermittelte Belohnungsfunktion und zumindest die weitere ermittelte Belohnungsfunktion zum Erhalten eines Vergleichsergebnisses zu vergleichen.

Gemäß einer weiteren Ausführungsform ist die Optimierungseinheit ferner eingerichtet, die Anlage unter Verwendung der festgelegten Optimierungsstrategie unter Ausführung von weiteren Aktionen an der Anlage solange anzusteuern, bis, basierend auf dem jeweiligen erhaltenen Vergleichsergebnis, welches durch einen weiteren Vergleich zwischen zumindest der ermittelten Belohnungsfunktion und einer der weiteren ermittelten Belohnungsfunktionen erhalten wird, durch die Optimierungseinheit eine optimale Belohnungsfunktion aus den ermittelten und/oder weiteren ermittelten Belohnungsfunktionen erhalten wird.

Dies hat den technischen Effekt, dass durch das Vergleichen der ermittelten Belohnungsfunktionen, die optimale Belohnungsfunktion gefunden wird. Somit kann in vorteilhafter Weise für jede bestimmte Optimierungsstrategie bestimmt werden, welche ermittelte Belohnungsfunktion aus ihr resultiert und welche Wirkung die bestimmte Optimierungsstrategie auf die Anlage, die Teilnehmer der Anlage und die physikalische Ressource der Anlage hat.

Die ermittelte optimale Belohnungsfunktion ist insbesondere der optimalen Optimierungsstrategie zugeordnet. Dies bedeutet, dass die optimalen Optimierungsstrategie, genau die Strategie ist, mittels welcher die optimale Belohnungsfunktion gefunden wurde.

Die Ermittlung der Belohnungsfunktion und der weiteren Belohnungsfunktion oder den weiteren Belohnungsfunktionen erfolgt insbesondere nacheinander oder sequentiell und/oder parallel.

Eine Belohnungsfunktion wird als Ergebnis davon erhalten, dass die Optimierungseinheit die Anlage unter Verwendung einer bestimmten oder festgelegten Optimierungsstrategie ansteuert und im Zuge dessen bei der Ansteuerung eine Aktion an der Anlage durchgeführt wird, welche Auswirkungen auf die Teilnehmer und die physikalische Ressource der Anlage hat. Als Ergebnis für diese Ansteuerung erhält oder ermittelt die Optimierungseinheit die Belohnungsfunktion.

Die optimale Belohnungsfunktion wird beispielsweise als Ergebnis des mehrfachen Anwendens und/oder Ansteuerns der Anlage unter Verwendung von mehreren verschiedenen bestimmten Optimierungsstrategien ermittelt.

Das Vergleichsergebnis gibt insbesondere an, ob beispielsweise bei der ermittelten Belohnungsfunktion mehr Kosten eingespart wurden, als bei der weiteren ermittelten Belohnungsfunktion.

Bei der Bewertung der jeweiligen ermittelten Belohnungsfunktionen werden insbesondere verschiedene Kostenfunktionen durch den Nutzer definiert, nach denen die Belohnungsfunktion bewertet wird. Diese Kostenfunktionen umfassen beispielsweise Kriterien mit Bezug auf die Produktion, wie Durchsatz, Produktionskosten und/oder Qualität der Produktion, als auch Kriterien mit Bezug auf das Trainingsverfahren, wie Robustheit und/oder Trainingsdauer des jeweiligen Software-Agenten.

Gemäß einer weiteren Ausführungsform ist die Konfigurationseinheit ferner eingerichtet, die mehreren Teilnehmer durch ein Klassifizierungsverfahren jeweils unterschiedlichen Klassen zuzuordnen, wobei die unterschiedlichen Klassen eine erste Klasse, in welcher einer der mehreren Teilnehmer als eine Senke ausgebildet ist, eine zweite Klasse, in welcher einer der mehreren Teilnehmer als eine Quelle ausgebildet ist und eine dritte Klasse, in welcher einer der mehreren Teilnehmer als eine Speichereinrichtung ausgebildet ist, umfassen.

Dies ermöglicht eine einfache automatische Einteilung der verschiedenen Teilnehmer der Teilnehmerverwaltung und eine einfache Auswertung und Priorisierung der Teilnehmer durch die Konfigurationseinheit. Dies verringert den Konfigurationsaufwand für die Ressourcenmanagementvorrichtung und erleichtert das Ressourcenmanagement aufgrund einer eindeutigen Einteilung der Teilnehmer.

Die unterschiedlichen Klassen werden insbesondere Funktionen zugeordnet, die das Flexibilisierungspotential und die Einstellbarkeit von Parametern der Teilnehmer beschreiben.

Gemäß einer weiteren Ausführungsform ist die Konfigurationseinheit ferner eingerichtet, das Klassifizierungsverfahren regelbasiert oder mittels einer Anwendung eines Algorithmus zum Maschinellen Lernen auf die mehreren Teilnehmer und deren teilnehmer-spezifische Selbstbeschreibungen durchzuführen.

Dies hat den Vorteil, dass die Klassifikation nicht manuell erfolgt, sondern automatisch, insbesondere durch ein vortrainiertes Modell eines Algorithmus zum Maschinellen Lernen, welches Datentypen, Einheiten und Wertebereiche der Eingabeparameter, welche die Konfigurationseinheit empfängt, für die Bewertung und Einordnung verwendet. Dies verringert den Aufwand für die Konfiguration der Ressourcenmanagementvorrichtung.

Eine Senke ist insbesondere eine Maschine, die Energie als Ressource in eine andere Form umwandelt. Eine Senke ist insbesondere ein Verbraucher. Ein Verbraucher umfasst beispielsweise einen Energieverbraucher, einen elektrischen Verbraucher einer Anlage, wie einen Motor, und/oder einen mechanischen Verbraucher.

Eine Quelle ist beispielsweise eine Energiequelle. Eine Energiequelle ist insbesondere ein Energieträger oder ein Energiewandler, welcher zur Erzeugung und Gewinnung von Energie dient. Dies kann eine Strom-/Spannungsquelle sein, welche zur Erzeugung von elektrischer Energie verwendet wird, eine Gasquelle zur Erzeugung von Gas, eine Wasserquelle zur Bereitstellung von Wasser oder eine Fernwärmequelle zur Bereitstellung von Fernwärme.

Ein Speicher ist vorzugsweise eine Einrichtung zum Speichern von materiellen Objekten. Ein materielles Objekt umfasst beispielsweise Energie, wie Wärme, Druck, Wasser, Öl, Gas und/oder elektrische Energie. Ferner können, wenn der Speicher beispielsweise als Festplatte ausgebildet ist, Daten gespeichert werden.

Der Algorithmus zum Maschinellen Lernen ist insbesondere als ein Algorithmus zum "überwachten Lernen" ausgebildet.

Regelbasiert bedeutet insbesondere, dass die Klassifikation nach festgelegten Klassen erfolgt, welche beispielsweise durch einen Anwender vorgegeben werden.

Gegebenenfalls können weitere Klassen definierte werden.

Gemäß einer weiteren Ausführungsform ist die physikalische Ressource zumindest teilweise in Form von Strom, Gas, Erdöl oder Wasser ausgebildet ist.

Die physikalische Ressource umfasst Strom, Druck, Rechenleistung, Wärme, wie Fernwärme, Wasser, Kraftstoffe, wie Gas, Erdgas, Erdöl und/oder Mineralöl.

Gemäß einer weiteren Ausführungsform umfasst die veränderte Ansteuerung gemäß der jeweiligen Aktion zumindest ein Einschalten, ein Ausschalten, ein Regeln, ein Umparametrisieren und/oder ein Laden eines Teilnehmers der mehreren Teilnehmer.

Somit kann in vorteilhafterweise gezielt in die Anlage, insbesondere in die Teilnehmer der Anlage durch die Ansteuerung eingegriffen werden, und die Anlage sowie die physikalische Ressource durch die veränderte Ansteuerung verändert werden. Dies ermöglicht eine gezielte Regelung und Parametrisierung der Teilnehmer der Anlage und erhöht die Benutzerfreundlichkeit.

Insbesondere können mehrere Teilnehmer gleichzeitig angesteuert werden, damit die jeweilige Aktion auf dem jeweiligen Teilnehmer durchgeführt wird. Beispielsweise kann ein erster Teilnehmer (z.B. ein erster Verbraucher) abgeschalten werden, während ein zweiter Teilnehmer (z.B. ein zweiter Verbraucher) hinzugeschalten wird, während ein dritter Teilnehmer (z.B. ein Speicher) dem zweiten Teilnehmer Energie bereitstellt.

Gemäß einer weiteren Ausführungsform umfasst die Veränderung der Konfiguration der Anlage zumindest ein Verbinden, ein Trennen und/oder ein paralleles Abschalten und/oder Einschalten zweier Teilnehmer der mehreren Teilnehmer.

Dies hat den Vorteil, dass in der Ressourcenmanagementvorrichtung gezielt Teilnehmergruppen eingeschalten, geregelt und/oder abgeschalten werden können, um die Anlage, insbesondere die physikalische Ressource zu beeinflussen. Damit wird das Management der physikalischen Ressource erleichtert.

Gemäß einer weiteren Ausführungsform ist die Anlage als eine reale physikalische Anlage oder als eine simulierte Anlage, welche eine Simulation der realen physikalischen Anlage umfasst, ausgebildet.

Wenn die Anlage als eine simulierte Anlage ausgebildet ist, hat dies den Vorteil, dass bei der Optimierung der simulierten Anlage kein Eingriff in die reale physikalische Anlage erfolgt und somit keine Schäden an der realen physikalischen Anlage entstehen können, da das Verhalten bei der Optimierung zuerst komplett simuliert wird. Erst wenn sichergestellt ist, dass die Optimierung ohne Komplikationen oder Fehler abläuft, kann insbesondere die Optimierung der realen physikalischen Anlage erfolgen.

Die Anlage kann als ein Stromnetz, ein Gasnetz, ein Wassernetz, ein Erdgasnetz, ein Ölnetz, ein Erdölnetz, ein Fernwärmenetz oder als ein Kraftwerk ausgebildet sein.

Gemäß einer weiteren Ausführungsform umfassen die mehreren erhaltenen Optimierungsvorgaben zumindest folgende bestimmte Optimierungsvorgaben: ein Preissignal, eine Lastkurve, ein Limit, ein Vertragsmodell und ein Zeitlastfenster.

Ferner können beispielsweise zusätzlich zu den Optimierungsvorgaben Randbedingungen (Constraints) von einem Anwender eingegeben werden, welche bei der Optimierung beachtet werden sollen. Diese Eingaben, also die Optimierungsvorgaben und Randbedingungen können insbesondere zur Laufzeit hinzugefügt werden.

Weitere Optimierungsvorgaben können beispielsweise ein Einstellen eines Toleranzbandes sein.

Bei der Optimierungsvorgabe "Folgen einer Lastkurve, eines Lastgangs oder eines Lastprofils" handelt es sich beispielsweise um eine Optimierungsvorgabe, bei der die Anlage danach optimiert wird, dass die Anlage eine möglichst gleichmäßige, über eine zeitliche Periode andauernde Leistungsentnahme aufweist, da Leistungsschwankungen zu Mehrkosten für den Betreiber der Anlage führen.

Bei der Optimierungsvorgabe "Einstellen eines Limits" handelt es sich beispielsweise um eine Optimierungsvorgabe, bei der die Anlage danach optimiert wird, dass diese möglichst keine Stromspitzen oder Stromlimits oder Leistungsspitzen erzeugt, da diese für den Betreiber der Anlage kostenintensiv sind. Durch diese Optimierungsvorgabe wird versucht, zu verhindern, dass Leistungsspitzen auftreten.

Bei der Optimierungsvorgabe "Festlegen eines Preissignals" handelt es sich beispielsweise um eine Optimierungsvorgabe, bei der die Anlage danach optimiert wird, in Abhängigkeit beispielsweise eines Energiepreises, wie des Strompreises, bestimmte, energieintensive Verbraucher zu den Zeitpunkten anzuschalten und zu verwenden, an denen der Strompreis niedrig ist, wie beispielsweise während der Nacht.

Bei der Optimierungsvorgabe "Festlegen eines Zeitlastfensters" handelt es sich beispielsweise um eine Optimierungsvorgabe, bei der die Anlage danach optimiert wird, dass innerhalb eines vorgegebenen Zeitfensters bestimmte Verbraucher (Last) aktiv sind und/oder während dieses Zeitfensters nur ein limitierter Energieverbrauch erfolgen soll.

Bei der Optimierungsvorgabe "Einstellen eines Toleranzbandes" handelt es sich beispielsweise um eine Optimierungsvorgabe, bei der die Anlage danach optimiert wird, ob die Anlage, insbesondere ob die Verbraucher, die Erzeuger und/oder die Speicher noch jeweils innerhalb eines vorgegebenen Toleranzbandes arbeiten, bei welchem beispielsweise eine Energiemenge, die durch den Erzeuger erzeugt wird, nicht überschritten werden darf.

Bei der Optimierungsvorgabe "Festlegen eines Vertragsmodells" handelt es sich beispielsweise um eine Optimierungsvorgabe, bei der die Anlage danach optimiert wird, dass bestimmte Bedingungen an die Ressource geknüpft werden, wie ein zeitlich veränderlicher Preis, eine Verfügbarkeit oder ein Abnahmezwang zu bestimmten Zeiten. Das jeweilige Vertragsmodell kann flexibel festgelegt werden und hat gegebenenfalls Einfluss auf die Bestimmung des jeweiligen Wertes der Belohnungsfunktion.

Gemäß einer weiteren Ausführungsform umfasst zumindest eine der mehreren teilnehmer-spezifischen Selbstbeschreibungen zumindest eine der folgenden spezifischen Information über einen Teilnehmer: eine aktuelle Leistungsaufnahme, eine aktuelle Parametereinstellung, einen Lastbereich, mögliche einstellbare Parameter, eine Freigabe, ob der Teilnehmer angesteuert werden darf, eine energetische Beschreibung der Zustände des Teilnehmers oder eine energetische Beschreibung der Transitionen des Teilnehmers.

Dies hat den Vorteil, dass die Flexibilität der Ressourcenmanagementvorrichtung und insbesondere der Anlage erhöht wird, da jeder Teilnehmer gezielt angesteuert und geregelt werden kann.

Die aktuelle Parametereinstellung umfasst beispielsweise die Drehzahl oder Geschwindigkeit eines Teilnehmers.

Der Lastbereich umfasst beispielsweise einen minimalen Lastbereich und/oder einen maximalen Lastbereich eines Teilnehmers.

Die einstellbaren Parameter sind insbesondere mögliche einstellbare Parameter hinsichtlich Drehzahl und/oder Geschwindigkeit eines Teilnehmers und/oder die Erlaubnis eines Zugriffs auf einen Speicher mittels des Teilnehmers.

Ferner kann die teilnehmer-spezifische Selbstbeschreibung spezifische Informationen über einen Teilnehmer hinsichtlich einer Möglichkeit zum Setzen der Parameter und/oder Einstellen der Last, beispielsweise über Variablen und/oder Methoden, aufweisen.

Die Freigabe umfasst beispielsweise Informationen darüber, welcher Teilnehmer durch welchen anderen Teilnehmer angesteuert werden darf oder welcher Teilnehmer überhaupt angesteuert werden darf.

Die energetische Beschreibung der Zustände umfasst insbesondere Warte- und Transitionszustände (Übergangszustände, Übergangszeiten) der Teilnehmer, welche durch zumindest die durchschnittliche Last des Zustandes, die durchschnittliche Dauer des Zustandes und/oder die Freigabe des Zustands, ob beispielsweise der Zustand einnehmbar ist oder nicht, beschrieben werden.

Die energetische Beschreibung der Zustände umfasst insbesondere die Beschreibung der Transitionen, also der Übergangszustände mittels zumindest einer Lastdifferenz, eines Lastgradienten, eines Zeitverhaltens, wie einer Startzeit und/oder einer Ausführungsdauer und weiteren Informationen, wie, ob die Lastvorgabe durch die Transition erreichbar ist und/oder ob die Lastvorgabe durch eine Laständerung erreichbar ist.

Die teilnehmer-spezifische Selbstbeschreibung ist insbesondere eine generische Beschreibung von den Teilnehmern der Anlage und/oder denen der Teilnehmerverwaltung.

Gemäß einem zweiten Aspekt wird ein Verfahren zum Verwalten zumindest einer physikalischen Ressource in einer Anlage mit mehreren Teilnehmern vorgeschlagen, wobei jeder der mehreren Teilnehmer eingerichtet ist, in Abhängigkeit von einer Ansteuerung mit der physikalischen Ressource zu wechselwirken oder die physikalische Ressource zu verändern. Das Verfahren umfasst:
a) Bereitstellen von Konfigurationsinformationen auf Basis mehrerer erhaltener teilnehmer-spezifischen Selbstbeschreibungen,
b) Auswählen zumindest einer bestimmten Optimierungsvorgabe auf Basis mehrerer erhaltener Optimierungsvorgaben,
c) Festlegen, aus mehreren bereitgestellten Optimierungsstrategien, einer bestimmten Optimierungsstrategie, wobei das Festlegen auf Basis der bereitgestellten Konfigurationsinformationen sowie der bestimmten Optimierungsvorgabe erfolgt,
d) Ansteuern der Anlage, unter Verwendung der festgelegten Optimierungsstrategie, unter Ausführung einer Aktion an der Anlage, wobei das Ansteuern der Anlage eine Ansteuerung zumindest einer der mehreren Teilnehmer umfasst, wobei die Aktion eine veränderte Ansteuerung und/oder Veränderung der Konfiguration der Anlage umfasst,
e) Überwachen der mittels Schritt d) angesteuerten Anlage, und
f) Ermitteln einer Belohnungsfunktion als Ergebnis der Ansteuerung der Anlage.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagram eines Ausführungsbeispiels eines Verfahrens zum Verwalten oder Verteilen einer physikalischen Ressource;
- Fig. 2: zeigt ein schematisches Blockdiagram eines Ausführungsbeispiels eines Ressourcenmanagementsystems umfassend eine Anlage mit mehreren Teilnehmern und eine Ressourcenmanagementvorrichtung; und
- Fig. 3: zeigt als ein Ausführungsbeispiel ein schematisches Blockdiagram einer Übersicht von mehreren Teilnehmern einer Anlage des Ressourcenmanagementsystems nach Fig. 2, welche untereinander in unterschiedlichen Konstellationen miteinander verbunden sind.

In den Figuren sind gleiche oder funktionsgleiche Elemente mit denselben Bezugszeichen versehen worden, sofern nichts anderes angegeben ist.

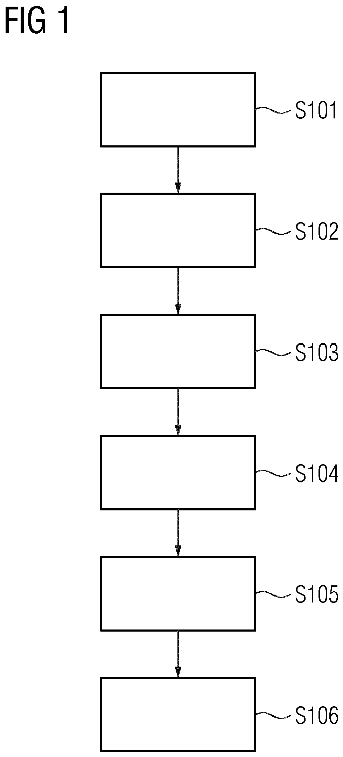

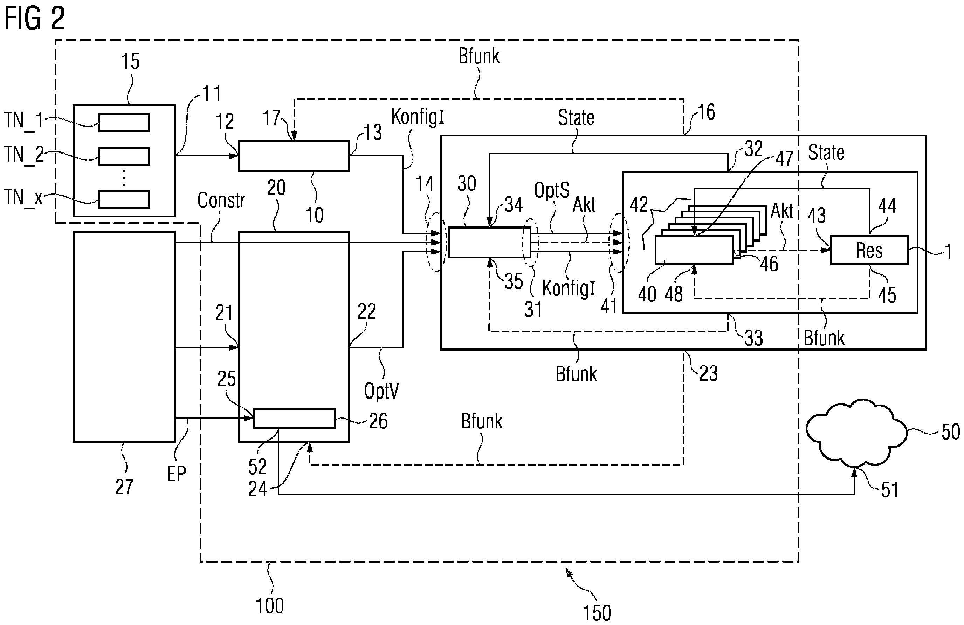

Anhand der Fig. 2 werden das Ressourcenmanagementsystem 150, die Funktionsweise der Ressourcenmanagementvorrichtung 100 in Kombination mit der Anlage 1 sowie das Verfahren zum Verwalten oder Verteilen einer physikalischen Ressource Res gemäß Fig. 1 erläutert.

In Fig. 1 ist ein schematisches Ablaufdiagram eines Ausführungsbeispiels eines Verfahrens zum Verwalten oder Verteilen einer physikalischen Ressource Res abgebildet. Das Verfahren umfasst die Verfahrensschritte S101, S102, S103, S104, S105 und S106. Die Ressourcenmanagementvorrichtung 100, welche in Fig. 2 dargestellt ist, ist ferner dazu eingerichtet, die Verfahrensschritte S101, S102, S103, S104, S105 und S106 der Fig. 1 durchzuführen.

Fig. 2 zeigt ein schematisches Blockdiagram eines Ausführungsbeispiels eines Ressourcenmanagementsystems 150 zum Verwalten oder Verteilen zumindest einer physikalischen Ressource Res umfassend eine Anlage 1 mit mehreren Teilnehmern TN_x und eine Ressourcenmanagementvorrichtung 100, welche wiederum eine Konfigurationseinheit 10, eine Priorisierungseinheit 20, eine Strategieeinheit 30 und eine Optimierungseinheit 40 umfasst.

In der Fig. 2 als auch in dem Verfahren nach Fig. 1 sind die Einheiten 10, 20, 30 und 40 jeweils als ein Computerprogramm, insbesondere als ein autonomer Software-Agent ausgebildet.

Fig. 2 zeigt die Konfigurationseinheit 10. In der Fig. 2 ist eine Teilnehmerverwaltung 15 mit der Konfigurationseinheit 10 gekoppelt und ist als Teil der Ressourcenmanagementvorrichtung 100 ausgebildet. Diese Kopplung erfolgt durch eine Verbindung zwischen dem Ausgang 11 der Teilnehmerverwaltung 15 und dem ersten Eingang 12 der Konfigurationseinheit 10. Die Teilnehmerverwaltung 15 umfasst die mehreren Teilnehmer TN x und ist dazu eingerichtet, mehrere teilnehmer-spezifische Selbstbeschreibungen für die Konfigurationseinheit 10 an dem ersten Eingang 12 der Konfigurationseinheit 10 bereitzustellen.

Die mehreren teilnehmer-spezifischen Selbstbeschreibungen umfassen in der Ausführungsform nach Fig. 2 zumindest eine der folgenden spezifischen Information über einen Teilnehmer: eine aktuelle Leistungsaufnahme, eine aktuelle Parametereinstellung, einen Lastbereich, mögliche einstellbare Parameter, eine Freigabe, ob der Teilnehmer angesteuert werden darf, eine energetische Beschreibung der Zustände des Teilnehmers oder eine energetische Beschreibung der Transitionen des Teilnehmers.

In der Ausführungsform der Fig. 2 ist die Ressourcenmanagementvorrichtung 100 ferner dazu eingerichtet ist, die mehreren Teilnehmer TN x in der Teilnehmerverwaltung 15 dynamisch auf eine Änderung der jeweiligen teilnehmer-spezifischen Selbstbeschreibung der einzelnen Teilnehmer der mehreren Teilnehmer TN_x zu überwachen.

Die Konfigurationseinheit 10 der Fig. 2 ist eingerichtet, auf Basis mehrerer erhaltener teilnehmer-spezifischen Selbstbeschreibungen, Konfigurationsinformationen KonfigI an einem Ausgang 13 der Konfigurationseinheit 10 bereitzustellen. Dieses Bereitstellen entspricht dem Verfahrensschritt S101 der Fig. 1. In Fig. 2 ist die Konfigurationseinheit 10 mit der Strategie- und Optimierungseinheit 30, 40, insbesondere mit der Strategieeinheit 30 gekoppelt. Diese Kopplung erfolgt durch eine Verbindung zwischen dem Ausgang 13 der Konfigurationseinheit 10 und dem gemeinsamen Eingang 14 der Strategie- und Optimierungseinheit 30, 40.

Zusätzlich ist die Konfigurationseinheit 10 der Fig. 2 ferner dazu eingerichtet, die mehreren Teilnehmer TN x durch ein Klassifizierungsverfahren jeweils unterschiedlichen Klassen zuzuordnen. Dieses Klassifizierungsverfahren erfolgt in einer Ausführungsform regelbasiert oder mittels einer Anwendung eines Algorithmus zum Maschinellen Lernen auf die mehreren Teilnehmer TN_x und deren teilnehmer-spezifische Selbstbeschreibungen.

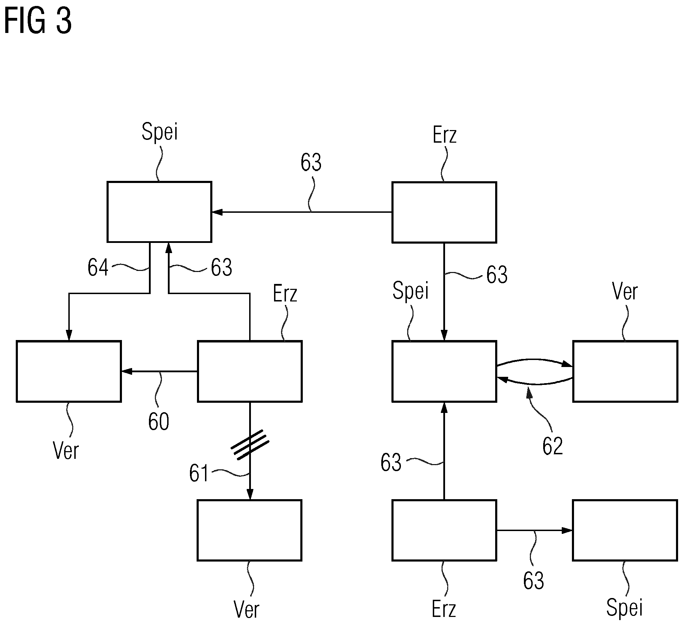

Die unterschiedlichen Klassen sind in folgende Klassen unterteilt: eine erste Klasse, in welcher einer der mehreren Teilnehmer TN_x als eine Senke Ver (siehe Fig. 3) ausgebildet ist, eine zweite Klasse, in welcher einer der mehreren Teilnehmer TN x als eine Quelle Erz (siehe Fig. 3) ausgebildet ist und eine dritte Klasse, in welcher einer der mehreren Teilnehmer TN x als ein Speicher Spei(siehe Fig. 3) ausgebildet ist. Ein erster Teilnehmer TN_1 einer ersten Klasse ist beispielsweise eine Senke Ver. Ein zweiter Teilnehmer TN 2 einer zweiten Klasse ist beispielsweise eine Quelle Erz.

Ferner ist in Fig. 2 die Priorisierungseinheit 20 dargestellt.
Die Priorisierungseinheit 20 erhält an dem ersten Eingang 21 mehrere Optimierungsvorgaben von einer Speichereinheit 27, welche diese gespeichert hat. Weiterhin werden von und durch die Speichereinheit 27 Randbedingungen Constr an den gemeinsamen Eingang 14 der Strategie- und Optimierungseinheit 30, 40 übertragen. Ferner ist die Speichereinheit 27 dazu eingerichtet, weitere Eingabeparameter EP von der Speichereinheit 27 zu dem Eingang 25 einer Eingabeparametereinheit 26 zu übertragen, wobei die Eingabeparametereinheit 26 in der Ausführungsform der Fig. 2 Teil der Priorisierungseinheit 20 ist.

Weiterhin ist die Eingabeparametereinheit 26 dazu eingerichtet, die weiteren Eingabeparameter EP über ihren Ausgang 52 an einen Eingang 51 eines Cloud-Services 50 zu übertragen. Der Cloud-Service 50 ist in einer Ausführungsform nicht Teil der Ressourcenmanagementvorrichtung 100. Insbesondere werden die weiteren Eingabeparameter EP, welche weder den Randbedingungen Constr noch den Optimierungsvorgaben OptV zugeordnet werden können, an den Cloud-Service 50 zur manuellen Bewertung und Zuordnung zu einer Kostenfunktion weitergeleitet.

Die Priorisierungseinheit 20 der Fig. 2 ist dazu eingerichtet, auf Basis mehrerer über ihren ersten Eingang 21 erhaltener Optimierungsvorgaben zumindest eine bestimmte Optimierungsvorgabe OptV auszuwählen, und diese an ihrem Ausgang 22 bereitzustellen. Dieses Auswählen entspricht dem Verfahrensschritt S102 der Fig. 1. In Fig. 2 ist die Priorisierungseinheit 20 mit der Strategie- und Optimierungseinheit 30, 40, insbesondere mit der Strategieeinheit 30 gekoppelt. Diese Kopplung erfolgt durch eine Verbindung zwischen dem Ausgang 22 der Priorisierungseinheit 20 und dem gemeinsamen Eingang 14 der Strategie- und Optimierungseinheit 30, 40. Mögliche bestimmte erhaltene Optimierungsvorgaben OptV sind beispielsweise: ein Preissignal, eine Lastkurve, ein Limit, ein Vertragsmodell und ein Zeitlastfenster.

Wie in Fig. 2 dargestellt, erhält die Strategieeinheit 30 an ihrem Eingang 14 die bereitgestellten Konfigurationsinformationen KonfigI von dem Ausgang 13 der Konfigurationseinheit 10 sowie die bestimmte Optimierungsvorgabe OptV von dem Ausgang 22 der Priorisierungseinheit 20.

Die Strategieeinheit 30 ist dazu eingerichtet, aus mehreren bereitgestellten Optimierungsstrategien eine bestimmte Optimierungsstrategie OptS festzulegen und diese an ihrem Ausgang 31 bereitzustellen. Diese Festlegung erfolgt insbesondere auf Basis der bereitgestellten Konfigurationsinformationen KonfigI sowie der bestimmten Optimierungsvorgabe OptV und entspricht dem Schritt S103 der Fig. 1.

In Fig. 2 ist die Strategieeinheit 30 mit der Optimierungseinheit 40 gekoppelt. Diese Kopplung erfolgt durch eine Verbindung zwischen dem Ausgang 31 der Strategieeinheit 30 und dem ersten Eingang 41 der Optimierungseinheit 40. Über diese Kopplung ist die Strategieeinheit 30 dazu eingerichtet, der Optimierungseinheit 40 an ihrem ersten Eingang 41 die festgelegte bestimmte Optimierungsstrategie OptS, eine Aktion Akt, mit welcher die Anlage 1 angesteuert werden soll und die Konfigurationsinformationen KonfigI bereitzustellen.
Die Optimierungseinheit 40 umfasst eine Vielzahl von möglichen bereitgestellten Optimierungsstrategien 42.

Die Optimierungseinheit 40 der Fig. 2 ist dazu eingerichtet, die Anlage 1 unter Verwendung der festgelegten Optimierungsstrategie OptS unter Ausführung einer Aktion Akt an der Anlage 1 anzusteuern. Dieses Ansteuern entspricht dem Schritt S104 der Fig. 1. Die Anlage 1 ist Teil des Ressourcenmanagementsystems 150 und in dieser Ausführungsform extern zu der Ressourcenmanagementvorrichtung 100 ausgebildet. Ferner ist die Anlage 1 in dieser Ausführungsform der Fig. 2 als eine simulierte Anlage ausgebildet. In einer weiteren Ausführungsform ist die Anlage 1 als eine reale physikalische Anlage ausgebildet.

Die Optimierungseinheit 40 ist mit der Anlage 1 gekoppelt. Diese Kopplung erfolgt über eine Verbindung zwischen dem Ausgang 46 der Optimierungseinheit 40 und dem Eingang 43 der Anlage 1. Durch die Ansteuerung der Optimierungseinheit 40 ist jeder der mehreren Teilnehmer TN_x eingerichtet, mit einer physikalischen Ressource Res, welche innerhalb der Anlage 1 angeordnet ist und welche mittels der Anlage 1 verwendet wird, zu wechselwirken oder die physikalische Ressource Res zu verändern. Weiterhin ist diese physikalische Ressource Res zumindest teilweise in Form von Strom, Gas, Erdöl oder Wasser ausgebildet.

Ferner ist die Optimierungseinheit 40 dazu eingerichtet, die angesteuerte Anlage 1 zu überwachen. Dies entspricht einem Schritt S105 der Fig. 1.

Die Optimierungseinheit 40 der Fig. 2 ist ferner dazu eingerichtet, eine Belohnungsfunktion BFunk als Ergebnis der Ansteuerung der Anlage 1 zu ermitteln. Das Ermitteln der Belohnungsfunktion BFunk entspricht dem Schritt S106 der Fig. 1. Die Anlage 1 ist danach dazu eingerichtet, mittels einer zweiten Rückkopplung 45 zu dem dritten Eingang 48 der Optimierungseinheit 40 diese ermittelte Belohnungsfunktion BFunk zurück zu übertragen. Zusätzlich ist die Anlage 1 dazu eingerichtet, den aktuellen Zustand der einzelnen Teilnehmer TN_x der Anlage 1 über ihre erste Rückkopplung 44 zu dem zweiten Eingang 47 der Optimierungseinheit 40 zurück zu übertragen.

Wie oben erläutert, ist die Optimierungseinheit 40 der Fig. 2 dazu eingerichtet, die Anlage 1 unter Verwendung der festgelegten Optimierungsstrategie OptS unter Ausführung einer Aktion Akt an der Anlage 1 anzusteuern. Diese Ansteuerung umfasst eine Ansteuerung zumindest einer der mehreren Teilnehmer TN_x.

Die Aktion Akt, welche bei der Ansteuerung an der Anlage 1 ausgeführt wird, umfasst einerseits eine veränderte Ansteuerung und andererseits eine Veränderung der Konfiguration der Anlage 1. Die veränderte Ansteuerung in der Fig. 2 umfasst ein Einschalten, ein Ausschalten, ein Regeln, ein Umparametrisieren und/oder ein Laden eines Teilnehmers der mehreren Teilnehmer TN x. Die Veränderung der Konfiguration der Anlage 1 umfasst in der Ausführungsform der Fig. 2 ein Verbinden, ein Trennen und/oder ein paralleles Abschalten und/oder Einschalten zweier Teilnehmer der mehreren Teilnehmer TN_x. Zusätzlich weist die Optimierungseinheit 40 eine erste und eine zweite Rückkopplung 32, 33 zu der Strategieeinheit 30 auf. Ferner weist die Kombination der Strategie- und der Optimierungseinheit 30, 40 eine Rückkopplung 16 zu der Konfigurationseinheit 10 und eine Rückkopplung 23 zu der Priorisierungseinheit 20 auf.

Diese Rückkopplungen werden nachfolgend anhand eines beispielhaften Ablaufs bei dem Zusammenspiel der Einheiten 10, 20, 30 und 40 näher erläutert.

Die Strategieeinheit 30, welche an ihrem Eingang 14 die Konfigurationsinformationen KonfigI umfassend die priorisierten Teilnehmer und die bestimmte Optimierungsvorgabe OptV erhalten hat, wählt eine der möglichen beschriebenen Optimierungsstrategien OptS, wie Spitzenlastmanagement oder Folgen einer Lastkurve, aus und gibt diese über ihren Ausgang 31 an den Eingang 41 der Optimierungseinheit 40 weiter.

Anschließend steuert die Optimierungseinheit 40 die Anlage 1 unter Verwendung der bestimmten Optimierungsstrategie OptS an. Dabei werden im Zuge der Ansteuerung verschiedene Aktion Akt an der Anlage 1 durchgeführt, welche unterschiedliche Auswirkungen auf die physikalische Ressource Res der Anlage 1 haben und diese verändern, da beispielsweise bestimmte Teilnehmer, welche als Verbraucher Ver ausgebildet sind, abgeschaltet werden und somit in dem Fall, wenn die physikalische Ressource als Strom ausgebildet ist, mehr Strom im Speicher Spei zur Verfügung steht.

Die Ansteuerung und die Ausführung einer Aktion Akt der verschiedenen Aktionen Akt entspricht einem Durchlauf des Vorgangs zwischen der Optimierungseinheit 40 und der Anlage 1.

Für jeden Durchlauf erhält die Optimierungseinheit 40 eine Belohnungsfunktion BFunk über ihren Eingang 48 von der zweiten Rückkopplung 45 der Anlage 1 sowie die Zustände State der Teilnehmer der Anlage 1, nachdem die Ansteuerung durchgeführt wurde, zurück. Ein Zustand State eines Teilnehmers ist beispielsweise in welchem Drehzahlbereich ein Teilnehmer, wenn er als Motor ausgebildet ist, sich bewegt oder welche Last dieser ansteuert. Die Belohnungsfunktion gibt beispielsweise an, wieviel Energiekosten bei dem jeweiligen durchgeführten Durchlauf eingespart wurden.

Nach einer definierten Anzahl von Durchläufen mit weiteren, erneuten Ansteuerungen der Teilnehmer TN x und somit weiteren Aktionen Akt weist die Optimierungseinheit 40 weitere, ermittelte Belohnungsfunktionen BFunk auf.

Die Optimierungseinheit 40 ist anschließend dazu eingerichtet, die ermittelte Belohnungsfunktion BFunk und zumindest die weitere oder weiteren ermittelten Belohnungsfunktionen BFunk zum Erhalten eines oder mehrerer Vergleichsergebnisse zu vergleichen.

Die Vergleichsergebnisse geben insbesondere an, bei welcher ermittelten Belohnungsfunktion BFunk beispielsweise am meisten Kosten eingespart wurden. Es wird solange durch die Optimierungseinheit 40 die Anlage 1 angesteuert, bis, basierend auf dem jeweiligen erhaltenen Vergleichsergebnis, durch die Optimierungseinheit 40 eine optimale Belohnungsfunktion BFunk aus den ermittelten und/oder weiteren ermittelten Belohnungsfunktionen BFunk erhalten wird. Die Belohnungsfunktion, bei welcher am meisten Kosten eingespart wurde, wird als die optimale Belohnungsfunktion für die bestimmte festgelegte Optimierungsstrategie OptS definiert.

Anschließend wählt die Strategieeinheit 30 eine der anderen Optimierungsstrategien OptS aus, und führt die obigen Durchläufe erneut durch, solange, bis alle Optimierungsstrategien getestet wurden.

Dann werden die getesteten Optimierungsstrategien anhand ihrer jeweils ermittelten optimalen Belohnungsfunktionen BFunk verglichen. Die Optimierungsstrategie OptS aus allen bereitgestellten Optimierungsstrategien, welche die meisten Kosten eingespart hat, kommt als am sinnvollsten in Frage und wird von der Strategieeinheit 30 ausgewählt.

Wenn die Strategieeinheit 30 die optimale Optimierungsstrategie OptS durch Bewerten der einzelnen Belohnungsfunktionen BFunk der jeweiligen Optimierungsstrategien gefunden hat, also beispielsweise welche Optimierungsstrategie OptV hat zu der größten Kosteneinsparung der Anlage 1 geführt, wird die Belohnungsfunktion BFunk dieser optimalen Optimierungsstrategie OptS über die Rückkopplung 16 und den Eingang 17 an die Konfigurationseinheit 10 und über die Rückkopplung 23 und den Eingang 24 an die Priorisierungseinheit 20 zurückgegeben.

Die Konfigurationseinheit 10 und die Priorisierungseinheit 20 sind nun dazu eingerichtet, eine neue Priorisierung der Teilnehmer TN_x sowie neue Optimierungsvorgaben OptV auszuwählen. Diese Schrittkette wird insbesondere solange ausgeführt, bis die optimalen Priorisierungen und die optimale Optimierungsstrategie gefunden wurden.

Eine dieser Optimierungsstrategien ist ein "lernendes Verfahren", welches diverse Zusammenhänge zwischen verfügbaren Teilnehmern TN_x und zu berücksichtigenden bestimmten Optimierungsvorgaben OptV und Randbedingungen Constr erlernt und geeignete Aktionen Akt aus einem vorgegebenen Set an Aktionen Akt wählt. Diesem "lernenden Verfahren" werden automatisiert alle Aktionen Akt, wie ein Abschalten von Teilnehmer TN_1, ein Regeln eines Parameter X an dem Teilnehmer TN_1, ein Einschalten des Teilnehmer TN_1, ein Wechseln eines Zustands von Teilnehmer TN 1 (z.B. Standby), ein Laden eines Speichers Spei, zur Verfügung gestellt, welche die mehreren Teilnehmer TN_x als einstellbare Parameter aus der jeweiligen teilnehmer-spezifischen Selbstbeschreibung mitbringen. Eine dieser Aktionen Akt wird ausgewählt und an die zu optimierende Anlage 1, oder wenn vorhanden an eine Simulation der Anlage 1, weitergegeben.

Die ausgewählte Aktion Akt wird ausgeführt und die Optimierungseinheit 40 bekommt von der Anlage 1 oder Simulation der Anlage 1 über den zweiten Eingang 47 der Optimierungseinheit 40 den aktualisierten Zustand State des Teilnehmers, welcher mittelbar oder unmittelbar von der ausgeführten Aktion Akt betroffen ist, wie beispielsweise den Leistungswert, und einen Belohnungsfunktion BFunk über den dritten Eingang 48 der Optimierungseinheit 40 zurück.

Der Zustand der Optimierungseinheit 40 setzt sich dabei aus seinen Informationen, welche die Optimierungseinheit 40 an ihrem ersten Eingang 41 erhalten hat, also die priorisierten Teilnehmer und die Optimierungsvorgabe und/oder Optimierungsvorgaben, und dem aktuellen Zustand State der Anlage 1 oder der Simulation der Anlage 1, wie beispielsweise dem aktueller Zustand State der Teilnehmer TN_x, wie einem Leistungswert der Anlage 1, zusammen. Die Optimierungseinheit 40 führt solange Aktionen Akt aus, bis diese die optimale Aktion Akt basierend auf den Informationen, die diese am ersten Eingang 41 erhalten hat, gefunden hat. Die Optimierungseinheit 40 lernt sozusagen mittels des "lernenden Verfahrens" die passende Optimierung der Anlage 1 in Abhängigkeit der priorisierten (optimalen) Optimierungsvorgaben OptV und Teilnehmer TN_x.

Ein erstes beispielhaftes Szenario ist ein Lastmanagementsystem und/oder ein Ressourcenmanagementsystem 150, in welchem die Einhaltung eines Leistungslimits und eines dynamischen Energiepreises und die Vermarktung von Regelenergie berücksichtigen werden soll. Hierbei könnte das trainierte selbstlernende System und/oder Verfahren wie folgt reagieren:
Bei zeitweiligen negativen Energiepreisen würde das System 150 weiterhin uneingeschränkt Energie beziehen, auch wenn dabei das Limit verletzt wird, da dabei insgesamt günstigere Kosten entstehen. Gleichzeitig würden Regelenergieabrufen immer ein Vorrang eingeräumt werden, solange dadurch nicht Randbedingungen Constr, wie beispielsweise in Bezug auf kritische Produktionsziele verletzt, würden. Darüber hinaus würde beispielsweise ein optimaler Einsatz von Speichern Spei und Kapazitäten zur Eigenerzeugung erlernt werden, vor allem auch beispielsweise unter Berücksichtigung von Opportunitätskosten.

Ein zweites beispielhaftes Szenario ist ein Lastmanagementsystem und/oder ein Ressourcenmanagementsystem 150, in welchem die bestimmte Optimierungsvorgabe OptV darin besteht, Energiekosten zu optimieren. Dies wird dadurch erzielt, dass das System 150, insbesondere die Teilnehmer TN_x der Anlage 1, derart angesteuert werden, dass den Verbrauchern Ver der Anlage 1 ein Limit gesetzt wird, welches diese mittels ihres Leistungsverbrauchs oder ihrer Leistungsspitzen nicht überschreiten dürfen. Um dies zu erreichen, werden die Teilnehmer TN_x der Anlage 1 unterschiedlich miteinander verbunden und unterschiedlich geregelt, abgeschalten, eingeschalten, usw. Da keine Überschreitung der Verbraucher Ver der Anlage 1 erfolgt, entstehen keine Leistungsspitzen. Da keine Leistungsspitzen entstehen, müssen diese nicht extra bezahlt werden und die Energiekosten können somit in vorteilhafter Weise optimiert werden.

Fig. 3 zeigt als ein Ausführungsbeispiel ein schematisches Blockdiagram einer Übersicht von mehreren Teilnehmern TN_x der Anlage 1 des Ressourcenmanagementsystems 150 nach Fig. 2, welche untereinander in unterschiedlichen Konstellationen miteinander verbunden sind und verschiedene Aktion Akt ausführen.

Fig. 3 umfasst insbesondere mehrere Teilnehmer TN_x, die als unterschiedliche Klassen ausgebildet sind, wie Verbraucher Ver, Erzeuger Erz und Speicher Spei. Die Teilnehmer TN_x interagieren unterschiedlich miteinander und führen auf Basis einer Ansteuerung der Anlage 1 durch die Optimierungseinheit 40 (siehe Fig. 2) unterschiedliche Aktionen Akt aus.

Die Aktionen Akt umfassen insbesondere eine veränderte Ansteuerung und/oder eine Veränderung der Konfiguration der Anlage 1. Die veränderte Ansteuerung umfasst ein Einschalten, ein Ausschalten, ein Regeln, ein Umparametrisieren und/oder ein Laden eines Teilnehmers TN_x. Die Veränderung der Konfiguration der Anlage 1 umfasst insbesondere ein Verbinden, ein Trennen und/oder ein paralleles Abschalten und/oder Einschalten zweier Teilnehmer der mehreren Teilnehmer TN_x.

Einige dieser Aktionen Akt sind somit auch in Fig. 3 dargestellt. Beispielsweise erfolgt bei 62 ein Austausch zweier Teilnehmer, insbesondere eines Speichers Spei und eines Verbrauchers Ver innerhalb der Anlage 1, sodass die Konfiguration der Anlage 1 sich auf Basis der Ansteuerung verändert.

Weiterhin ist in 61 dargestellt, wie ein Verbraucher Ver zuerst abgeschalten wird und dann dessen Verbindung zu dessen Erzeuger Erz getrennt wird. Im Zuge dessen wird eine neue Verbindung zwischen dem Erzeuger Erz und einem weiteren Verbraucher Ver bei 60 aufgebaut. Anschließend wird der neue Verbraucher Ver eingeschalten.

Ferner wird beispielsweise mit 63 ein jeweiliges Laden oder Aufladen eines Speichers Spei durch einen Erzeuger Erz dargestellt. Weitere typische Verbindungen zwischen Teilnehmern TN_x der Anlage 1 des Lastmanagementsystems und/oder des Ressourcenmanagementsystems 150 (siehe Fig. 2) sind in Fig. 3 dargestellt.

## Patentansprüche

1. Ressourcenmanagementvorrichtung (100) zum Verwalten oder Verteilen zumindest einer physikalischen Ressource (Res) in einer Anlage (1) mit mehreren Teilnehmern (TN_x), wobei jeder der mehreren Teilnehmer (TN x) eingerichtet ist, in Abhängigkeit von einer Ansteuerung mit der physikalischen Ressource (Res) zu wechselwirken oder die physikalische Ressource (Res) zu verändern, wobei die Ressourcenmanagementvorrichtung (100) umfasst:
eine Konfigurationseinheit (10), die eingerichtet ist, auf Basis mehrerer erhaltener teilnehmer-spezifischen Selbstbeschreibungen, Konfigurationsinformationen (KonfigI) bereitzustellen,
eine Priorisierungseinheit (20), die eingerichtet ist, auf Basis mehrerer erhaltener Optimierungsvorgaben zumindest eine bestimmte Optimierungsvorgabe (OptV) auszuwählen,
eine Strategieeinheit (30), die eingerichtet ist, aus mehreren bereitgestellten Optimierungsstrategien eine bestimmte Optimierungsstrategie (OptS) festzulegen, wobei die Festlegung auf Basis der bereitgestellten Konfigurationsinformationen (KonfigI) sowie der bestimmten Optimierungsvorgabe (OptV) erfolgt,
eine Optimierungseinheit (40), die eingerichtet ist, die Anlage (1) unter Verwendung der festgelegten Optimierungsstrategie (OptS) unter Ausführung einer Aktion (Akt) an der Anlage (1) anzusteuern, die angesteuerte Anlage (1) zu überwachen, und eine Belohnungsfunktion (BFunk) als Ergebnis der Ansteuerung der Anlage (1) zu ermitteln, wobei das Ansteuern der Anlage (1) eine Ansteuerung zumindest einer der mehreren Teilnehmer (TN_x) umfasst, wobei die Aktion (Akt) eine veränderte Ansteuerung und/oder eine Veränderung der Konfiguration der Anlage (1) umfasst.

2. Ressourcenmanagementvorrichtung nach Anspruch 1,
**dadurch gekennzeichnet,**
**dass** die Konfigurationseinheit (10), die Priorisierungseinheit (20), die Strategieeinheit (30) und die Optimierungseinheit (40) jeweils als ein Computerprogramm, insbesondere als ein autonomer Software-Agent oder als ein autonomer Softbot ausgebildet ist.

3. Ressourcenmanagementvorrichtung nach Anspruch 1 oder 2,
**dadurch gekennzeichnet,**
**dass** die Ressourcenmanagementvorrichtung (100) eine Teilnehmerverwaltung (15) aufweist, welche die mehreren Teilnehmer (TN_x) umfasst und welche eingerichtet ist, die mehreren teilnehmer-spezifischen Selbstbeschreibungen für die Konfigurationseinheit (10) bereitzustellen.

4. Ressourcenmanagementvorrichtung nach Anspruch 3,
**dadurch gekennzeichnet,**
**dass** die Ressourcenmanagementvorrichtung (100) ferner eingerichtet ist, die mehreren Teilnehmer (TN_x) in der Teilnehmerverwaltung (15) dynamisch auf eine Änderung der jeweiligen teilnehmer-spezifischen Selbstbeschreibung der einzelnen Teilnehmer der mehreren Teilnehmer (TN_x) zu überwachen.

5. Ressourcenmanagementvorrichtung nach einem der Ansprüche 1 bis 4,
**dadurch gekennzeichnet,**
**dass** die Optimierungseinheit (40) ferner eingerichtet ist, die Anlage (1) unter Verwendung der festgelegten Optimierungsstrategie (OptS) unter Ausführung einer weiteren Aktion (Akt) an der Anlage (1) erneut anzusteuern, die erneute angesteuerte Anlage (1) zu überwachen, und eine weitere Belohnungsfunktion (BFunk) als Ergebnis der erneuten Ansteuerung der Anlage (1) zu ermitteln, wobei die Optimierungseinheit (40) ferner eingerichtet ist, die ermittelte Belohnungsfunktion (BFunk) und zumindest die weitere ermittelte Belohnungsfunktion (BFunk) zum Erhalten eines Vergleichsergebnisses zu vergleichen.

6. Ressourcenmanagementvorrichtung nach Anspruch 5,
**dadurch gekennzeichnet,**
**dass** die Optimierungseinheit (40) ferner eingerichtet ist, die Anlage (1) unter Verwendung der festgelegten Optimierungsstrategie (OptS) unter Ausführung von weiteren Aktionen (Akt) an der Anlage (1) solange anzusteuern, bis, basierend auf dem jeweiligen erhaltenen Vergleichsergebnis, welches durch einen weiteren Vergleich zwischen zumindest der ermittelten Belohnungsfunktion (BFunk) und einer der weiteren ermittelten Belohnungsfunktionen (BFunk) erhalten wird, durch die Optimierungseinheit (40) eine optimale Belohnungsfunktion (BFunk) aus den ermittelten und/oder weiteren ermittelten Belohnungsfunktionen (BFunk) erhalten wird.

7. Ressourcenmanagementvorrichtung nach einem der Ansprüche 1 bis 6,
**dadurch gekennzeichnet,**
**dass** die Konfigurationseinheit (10) ferner eingerichtet ist, die mehreren Teilnehmer (TN_x) durch ein Klassifizierungsverfahren jeweils unterschiedlichen Klassen zuzuordnen, wobei die unterschiedlichen Klassen eine erste Klasse, in welcher einer der mehreren Teilnehmer (TN x) als eine Senke ausgebildet ist, eine zweite Klasse, in welcher einer der mehreren Teilnehmer (TN x) als eine Quelle ausgebildet ist und eine dritte Klasse, in welcher einer der mehreren Teilnehmer (TN_x) als eine Speichereinrichtung ausgebildet ist, umfassen.

8. Ressourcenmanagementvorrichtung nach Anspruch 7,
**dadurch gekennzeichnet,**
**dass** die Konfigurationseinheit (10) ferner eingerichtet ist, das Klassifizierungsverfahren regelbasiert oder mittels einer Anwendung eines Algorithmus zum Maschinellen Lernen auf die mehreren Teilnehmer (TN x) und deren teilnehmer-spezifische Selbstbeschreibungen durchzuführen.

9. Ressourcenmanagementvorrichtung nach einem der Ansprüche 1 bis 8,
**dadurch gekennzeichnet,**
**dass** die physikalische Ressource (Res) zumindest teilweise in Form von Strom, Gas, Erdöl oder Wasser ausgebildet ist.

10. Ressourcenmanagementvorrichtung nach einem der Ansprüche 1 bis 9,
**dadurch gekennzeichnet,**
**dass** die veränderte Ansteuerung gemäß der jeweiligen Aktion (Akt) zumindest ein Einschalten, ein Ausschalten, ein Regeln, ein Umparametrisieren und/oder ein Laden eines Teilnehmers der mehreren Teilnehmer (TN_x) umfasst.

11. Ressourcenmanagementvorrichtung nach einem der Ansprüche 1 bis 10,
**dadurch gekennzeichnet,**
**dass** die Veränderung der Konfiguration der Anlage (1) zumindest ein Verbinden, ein Trennen und/oder ein paralleles Abschalten und/oder Einschalten zweier Teilnehmer der mehreren Teilnehmer (TN_x) umfasst.

12. Ressourcenmanagementvorrichtung nach einem der Ansprüche 1 bis 11,
**dadurch gekennzeichnet,**
**dass** die Anlage (1) als eine reale physikalische Anlage oder als eine simulierte Anlage, welche eine Simulation der realen physikalischen Anlage umfasst, ausgebildet ist.

13. Ressourcenmanagementvorrichtung nach einem der Ansprüche 1 bis 12,
**dadurch gekennzeichnet,**
**dass** die mehreren erhaltenen Optimierungsvorgaben zumindest folgende bestimmte Optimierungsvorgaben (OptV) umfassen: ein Preissignal, eine Lastkurve, ein Limit, ein Vertragsmodell und ein Zeitlastfenster.

14. Ressourcenmanagementvorrichtung nach einem der Ansprüche 1 bis 13,
**dadurch gekennzeichnet,**
**dass** zumindest eine der mehreren teilnehmer-spezifischen Selbstbeschreibungen zumindest eine der folgenden spezifischen Information über einen Teilnehmer umfasst: eine aktuelle Leistungsaufnahme, eine aktuelle Parametereinstellung, einen Lastbereich, mögliche einstellbare Parameter, eine Freigabe, ob der Teilnehmer angesteuert werden darf, eine energetische Beschreibung der Zustände des Teilnehmers oder eine energetische Beschreibung der Transitionen des Teilnehmers.

15. Verfahren zum Verwalten oder Verteilen zumindest einer physikalischen Ressource (Res) in einer Anlage (1) mit mehreren Teilnehmern (TN_x), wobei jeder der mehreren Teilnehmer (TN_x) eingerichtet ist, in Abhängigkeit von einer Ansteuerung mit der physikalischen Ressource (Res) zu wechselwirken oder die physikalische Ressource (Res) zu verändern, wobei das Verfahren umfasst:
a) Bereitstellen (S101) von Konfigurationsinformationen (KonfigI) auf Basis mehrerer erhaltener teilnehmer-spezifischen Selbstbeschreibungen,
b) Auswählen (S102) zumindest einer bestimmten Optimierungsvorgabe (OptV) auf Basis mehrerer erhaltener Optimierungsvorgaben,
c) Festlegen (S103), aus mehreren bereitgestellten Optimierungsstrategien, einer bestimmten Optimierungsstrategie (OptS), wobei das Festlegen auf Basis der bereitgestellten Konfigurationsinformationen (KonfigI) sowie der bestimmten Optimierungsvorgabe (OptV) erfolgt,
d) Ansteuern der Anlage (1) (S104), unter Verwendung der festgelegten Optimierungsstrategie (OptS), unter Ausführung einer Aktion (Akt) an der Anlage (1), wobei das Ansteuern der Anlage (1) eine Ansteuerung zumindest einer der mehreren Teilnehmer (TN x) umfasst, wobei die Aktion (Akt) eine veränderte Ansteuerung und/oder eine Veränderung der Konfiguration der Anlage (1) umfasst,
e) Überwachen (S105) der mittels Schritt d) angesteuerten Anlage (1), und
f) Ermitteln (S106) einer Belohnungsfunktion (BFunk) als Ergebnis der Ansteuerung der Anlage (1).
